# EUROPEAN PATENT APPLICATION

(11) **EP 1 976 231 A1**
(43) Date of publication of application: **01.10.2008**
(21) Application number: 07006674.1
(22) Date of filing: 30.03.2007
(51) Int. Cl.: H04L 29/08, H04Q 7/38

(54) **System, device and method for wireless communication**

(71) Applicant: Koninklijke KPN N.V., 2516 CK The Hague (NL)
(72) Inventor: Sissing, Johannes J., 8925 GA Leeuwarden (NL)
(74) Representative: Wuyts, Koenraad Maria

(57) **Abstract**

A system for wireless communication comprises a first and a second wireless transceiver (102). The system comprises a means (106) for establishing whether the first wireless transceiver is in a coverage area (108) of the second wireless transceiver by comparing a geographic location information relating to the first wireless transceiver and a geographic location information relating to the second wireless transceiver. The system comprises a control module (110) for, upon establishing that the first wireless transceiver is in the coverage area of the second wireless transceiver, setting up a connection (118) between the first wireless transceiver and the second wireless transceiver, the first wireless transceiver and the control module are part of a portable device (112). The system comprises a localizer (114) for establishing geographic location information of a localization device.

## Description

### FIELD OF THE INVENTION

The invention relates to a system for wireless communication.

### BACKGROUND OF THE INVENTION

Wireless communication techniques are becoming more and more popular. For example, the IEEE 802.11 standards define wireless communication between a station and an access point. The standard also defines communication between several equivalent stations. When such networks are used at home, usually one access point is used to have network coverage for the entire home. The wireless stations present in for example laptops or handheld devices provide access to resources such as the Internet via the access point. However, when the wireless station is taken further away from home, and out of the coverage area of the home access point, the station cannot communicate any more with the access point and thus loses the capability to provide access to the resources such as the Internet.

The station may either wait until it is brought back into the coverage area of the home access point, or it may try to find publicly available access points within its coverage area. However, it is energy consuming to (continuously) watch for available access point(s).

WO 2005/079041 discloses a wireless network detector that enables a user to scan and find access points for one or more wireless networks present in a scanned location. The detector can provide visual and audio feedback about the detected wireless networks. The wireless network detector can provide information to a user, including the strength of a signal, network identifying information such as network SSID, whether encryption is enabled, etc. The wireless network detector can translate technical network SSIDs or labels into descriptive and understandable text, symbols or names that can be displayed to the user. In one aspect, the wireless network detector scans for transmissions of IEEE 802.11 wireless access points to obtain configuration characteristics relating to a detected wireless fidelity network. The wireless network detector can be configured to detect selected wireless networks and to display detection results only for selected or related wireless networks.

### SUMMARY OF THE INVENTION

It is an object of the invention to provide an improved system for wireless communication. In a first aspect of the invention, a system for wireless communication is presented that comprises
a first wireless transceiver;
a second wireless transceiver;
a means for establishing whether the first wireless transceiver is in a coverage area of the second wireless transceiver by comparing a geographic location information relating to the first wireless transceiver and a geographic location information relating to the second wireless transceiver; and
a control module for, upon establishing that the first wireless transceiver is in the coverage area of the second wireless transceiver, setting up a connection between the first wireless transceiver and the second wireless transceiver.

Because geographic information is used, the need is eliminated to send probe signals or monitor received signals via the first wireless transceiver. This saves energy at the first wireless transceiver. The geographic location information allows to establish, independently from the signals transmitted or received by the first wireless transceiver and the second wireless transceiver, whether the two wireless transceivers are close enough to each other to allow them to set up a connection with a high probability of success. Only after it has already been established that the first wireless transceiver is in the coverage area of the second wireless transceiver, the first wireless transceiver needs to start transmitting and/or receiving signals to establish the connection between the first wireless transceiver and the second wireless transceiver. This improves efficiency, as it reduces the bandwidth and energy used for unsuccessful attempts to set up a connection. It makes use of the common fact that the wireless transceivers are often relatively far away from each other. Therefore, when traveling, there is not always a wireless transceiver to connect to. The geographic information helps to determine whether a wireless transceiver is available to connect to. Preferably a plurality of second wireless transceivers is provided and means to establish whether the first wireless transceiver is in a coverage area of at least one of the plurality of second wireless transceivers. The first and second transceivers may be part of and/or operated by devices such as laptops, PDA's, navigation systems, Wifi-enabled VOIP telephone handsets, and/or Wifi access points.

In an embodiment, the first wireless transceiver and the control module are part of a portable device, the system further comprising a localizer for establishing the geographic location information of the first wireless transceiver.

The geographic location becomes more important in relation to portable devices, because portable devices are moved around often. The localizer keeps track of the geographic location information and makes sure it is up-to-date. The localizer uses a known technique to identify the location of the device and the first wireless transceiver. For example, the localizer can use the Global Positioning System (GPS) or any other localization system. For example, a mobile telephony network can also be used for providing geographic location information.

An embodiment comprises a localization device, and the localizer is arranged for generating the geographic location information of the first wireless transceiver based on a geographic location of the localization device, and the localization device comprises an output for providing a signal to the portable device when the first wireless transceiver is in a coverage area of the second wireless transceiver.

It is advantageous to use a separate localization device. In operation, the portable device and the localization device are moved more or less together, i.e., the two devices stay close to each other. The localization device is a device that the user is already carrying around for a different purpose, for example as a navigation system (e.g. a GPS-based device) or as a mobile phone (e.g. a GSM-based device or a UMTS-based device). Therefore, the components can be re-used and need not be duplicated in the portable device, which also saves energy.

In an embodiment the signal is a wireless signal having a range smaller than the coverage area of the second wireless transceiver.

A wireless connection between the portable device and the localization device is convenient for the user. However, a wireless connection does not physically prevent the two devices to be moved apart from each other. This embodiment prevents that the signal reaches the portable device when the distance is larger than the coverage area of the second wireless transceiver. This reduces the possibility that a signal reaches the portable device when it is not in the coverage area of the second wireless transceiver.

In an embodiment the portable device comprises means for retrieving content, for example a newspaper, via the connection. This embodiment provides an efficient way to keep the content in the device up-to-date, because current content is retrieved when the established connection is available. If no connection is established, no energy or processing time is wasted by trying to connect to a server that provides the content.

In an embodiment the portable device comprises means for synchronizing data, for example e-mail or calendar items, via the connection. This embodiment provides an efficient way to keep the data in the device synchronized with on-line data.

An embodiment comprises means for waking up the portable device from a stand-by mode upon establishing that the first wireless transceiver is in the coverage area of the second wireless transceiver. This helps to conserve energy and to improve user friendliness: The user (or some mechanism) can switch the device into a stand-by mode for saving energy, and still does not need to worry that a connection is missed, because the device is waked up upon activation of the trigger.

In an embodiment the localization device is a mobile phone, the system further comprising a server system connected to the mobile phone via a mobile phone network, the server system comprising
a mobile phone localizer for establishing the geographic location information of the localization device;
the localizer; and
an output for transmitting a signal to the localization device upon establishing by the localizer that the first wireless transceiver is in the coverage area of the second wireless transceiver.

The mobile phone is a very suitable localization device. Existing technology can be used to establish geographic location information of the mobile phone. For example it can be determined in which cell of a cell phone network the mobile phone is located. More advanced techniques allow to determine more precisely where the mobile phone is located within the cell. This information can be combined with geographic location information relating to the second wireless transceiver, and a signal can be easily sent via the mobile phone network to the mobile phone to indicate that the mobile phone, and hence the first wireless transceiver, are in the coverage area of the second wireless transceiver. It is an economic embodiment because mobile telephones are readily available and need only minimal to none adaptation. The localizer may be implemented at least partly in the servers of the telecom provider or in the mobile phone.

In an embodiment the server system further comprises a content flag for indicating whether new content is available to be provided to the portable device via the connection. The content flag is used to better inform the mobile phone and/or the portable device about the need to connect to the second wireless transceiver. If no content is available, it may be unnecessary to connect to the second wireless transceiver.

In an embodiment the output is arranged for only transmitting the signal if the new content is available and the first wireless transceiver is in the coverage area of the second wireless transceiver. This reduces the network bandwidth required.

In an embodiment the output is arranged for transmitting a first signal when the new content is available and a second signal when the first wireless transceiver is in the coverage area of the second wireless transceiver. This enables the localization device and/or the portable device to decide whether to make a connection, based on the presence of the content and the presence of the second wireless transceiver. If new content is not available, but the first wireless transceiver is in the coverage area of the second wireless transceiver, the portable device may still set up the connection according to need, for example to transmit some data.

In an embodiment the second wireless transceiver has a fixed geographic location, the system further comprising a storage means for storing the geographic location information corresponding to the fixed geographic location of the second wireless transceiver. Because the second wireless transceiver has a fixed geographic location, a storage means is a very practical and efficient way to have its corresponding geographic location information available. The fixed geographic locations can be pre-determined and permanently stored. In an embodiment, the storage means includes geographic location information relating to a plurality of wireless transceivers, and the trigger is activated if the first wireless transceiver is in a coverage area of any of the plurality of wireless transceivers.

In an embodiment the localization device comprises means for including in the signal information regarding credentials needed for establishing a connection with the second wireless transceiver. In that case, the credentials do not have to be stored locally. This is particularly of interest when there are a large number of second wireless transceivers each requiring different credentials for allowing a connection.

An embodiment provides a portable device for wireless communication, the portable device comprising
a first wireless transceiver;
a means for establishing whether the first wireless transceiver is in a coverage area of a second wireless transceiver in dependence on a geographic location information of the first wireless transceiver and a geographic location information of the second wireless transceiver; and
a control module for, upon establishing that the first wireless transceiver is in the coverage area of a second wireless transceiver, setting up a connection between the first wireless transceiver and the second wireless transceiver.

An embodiment provides a method of wireless communication, the method comprising
establishing whether a first wireless transceiver is in a coverage area of a second wireless transceiver by comparing a geographic location information of the first wireless transceiver and a geographic location information of the second wireless transceiver; and
upon establishing that the first wireless transceiver is in the coverage area of the second wireless transceiver, setting up a connection between the first wireless transceiver and the second wireless transceiver.

### BRIEF DESCRIPTION OF THE DRAWINGS

These and other aspects of the invention will be further elucidated and described with reference to the drawing, in which
Figure 1 is a diagram of an embodiment.
Figure 2 is a diagram of an embodiment.

### DETAILED DESCRIPTION OF EMBODIMENTS

Wireless devices, for example Wifi devices, use a lot of power while looking for valid Wifi connections. A subscriber to for example a digital newspaper wants to keep his local copy of the digital newspaper up-to-date by continuously downloading the content when it becomes available using his Wifi device. At the same time, the subscriber appreciates a long battery life time, and hence power saving is an issue. Power usage can be reduced when considering that it only makes sense to attempt to connect to a Wifi access point when the wireless device is in the neighborhood of a Wifi access point. By using knowledge of the locations of the access points and knowledge about the location of the Wifi device, it can be determined from these locations whether the Wifi device is (approximately) in the coverage area of one of the access points, without transmitting or receiving any Wifi signals.

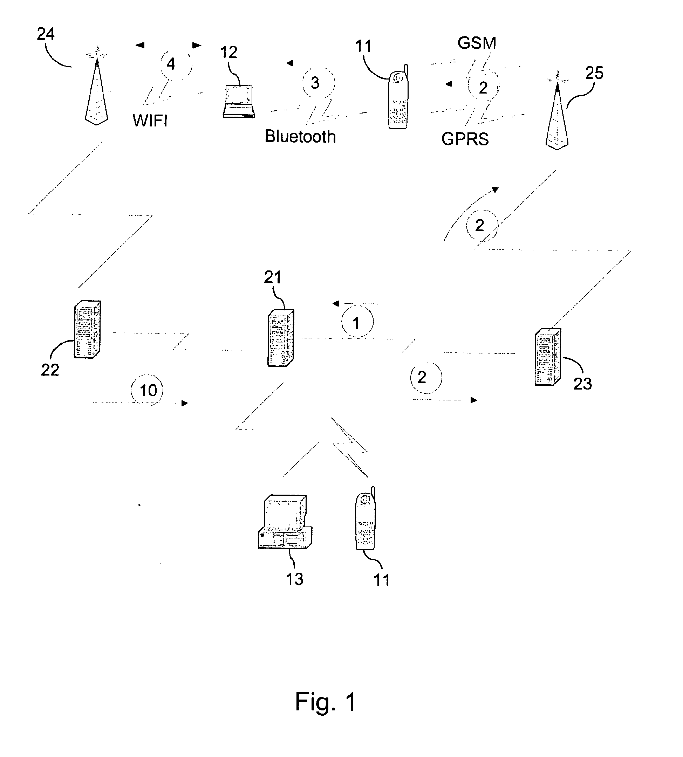

Figure 1 is a diagram of a communications system. The figure illustrates several devices 11,12 and communication towers or base stations 24,25. Communication between these devices and base stations takes place using Wifi, Bluetooth, GSM, and/or GPRS, as illustrated in an exemplary fashion and according to the capabilities of each device or base station. The base stations 24,25 have access to a wide-area network comprising several servers 21,22,23, and at least one of the servers 21 is capable of being configured according to preferences of a user of one of the devices 11. This configuration may take place by using the device 11 itself or via a PC 13 with a web browser.

The figure shows a laptop computer 12 and a mobile phone 11. These devices preferably belong to a single user. The laptop computer 12 is programmed to automatically synchronize content with a server 22. For example, the user has a subscription to a continuous news feed or to a real-time stock quote feed. The laptop 12 is programmed to download the content as it becomes available. In another example, the laptop 12 is programmed to synchronize e-mail or local files with a mail server or file server at the company he or she works for, at regular time intervals. When the laptop 12 is not connected to a wired network connection (e.g. LAN), the laptop 12 uses an IEEE 802.11 compliant ("Wifi") subsystem comprising a transceiver to connect to an access point 24. The access point 24 may be a private access point, provided by the company or an access point at home. The access point 24 may also be a public access point. Such a public access point may be any unprotected access point that provides access to the Internet. The public access point may also be an access point from an access provider who requires a payment in form of a subscription fee or a one-time payment fee. Different credentials are required for different types of access points. The private home and office access points have credentials that are self-created or provided by the company. The unprotected access points may not require any credentials. The access point provided by an access provider may require credentials such as a password or a credit card number as determined by the access provider. These credentials may vary from access point to access point.

When power and bandwidth are not an issue, the laptop 12 may maintain a connection with the access point 24 as long as it is within the coverage area of the access point. The coverage area is defined as the area around an access point 24 within which the Wifi signals are strong enough to maintain a connection with the laptop 12. At regular time intervals the laptop 12 polls for new content from the server 22 via the access point 24 by means of message 4. Alternatively the server 22 sends a signal to the laptop 12 via the access point 24 whenever new content is available (a "push" technique).

When power and/or bandwidth are an issue, for example when operating on battery power, the laptop 12 only connects to the access point 24 when the connection is needed, for example when polling for new content.

When the laptop is taken out of the coverage area of the access point 24, the Wifi connection is lost, and the laptop seeks for the presence of another access point by transmitting and/or monitoring Wifi signals. However, if no access point is available, conventionally the laptop will continue to seek for access points until the laptop is moved into the coverage area of another (or the same) access point, in order that a connection may be established. In this embodiment, when the laptop 12 notices that the connection with the access point 24 has been lost, the laptop 12 shortly checks whether another access point is available. If another access point is available, the laptop 12 connects to that access point. If another access point is not available, or if only access points are available for which the laptop does not have the proper permissions and/or credentials, then the laptop 12 does not continue to seek for access points. The laptop 12 may disable its Wifi subsystem in order to save energy. The laptop 12 may also be programmed to switch to a stand-by mode in this case.

The laptop 12 is supposed to be kept close to the mobile phone 11. Usually, this will be the case because the user takes both the laptop 12 and the mobile phone 11 with him whenever he moves around. If he does not take the laptop 12 with him, but only the mobile phone 11, then it may be of less interest whether the information on the laptop 12 is kept up-to-date. However most people will always keep their mobile phone 11 with them, so if the user takes his laptop 12 with him, the laptop 12 will stay in the vicinity of the mobile phone 11. As the laptop 12 is not using its Wifi subsystem it cannot detect Wifi access points directly. Geographic location information is used to determine whether an access point is nearby. In this embodiment, the geographic location information is obtained via the mobile phone 11. As long as the mobile phone 11 is kept in the vicinity of the laptop 12, the geographic location of the mobile phone 11 will be close enough to the geographic location of the laptop 12 for determining whether an access point is available for the laptop 12. It is well known that a server 23 of in a GSM network keeps track of the approximate location of the mobile phone. The server 23 at least knows in which GSM cell the mobile phone is. Emerging technologies allow to obtain a more precise indication (for example with a precision of about 50 meters) of where the user is located within the cell. The server 23 thus knows the geographic location of the mobile phone. This geographic location information is sent via message 1 from server 23 to server 21. Server 21 also knows the locations of a number of access points. The user may have configured the server 21 via a web browser 13 or via his mobile phone 11 (for example using GPRS and/or i-mode). Such configuration may include the locations and optionally the credentials relating to his home and office access points. The server 21 may also be configured by an access point provider to store geographic location information and optionally credentials relating to publicly available access points. Of course, the credentials may also be stored in the laptop 12. The server 21 may also provide information regarding the type of access point 24 (communication protocol used, name of access provider, etc.). The server 21 compares the geographic location information relating to the mobile phone received in the message 1 to the stored geographic location information relating to access points. If the mobile phone 11 is in a coverage area of at least one of the access points according to the geographic location information, the server 21 sends a message 2 to the server 23. The server 23 forwards the message 2, for example as an SMS message or as a WAP push message, to the base station 25. The base station uses GSM and/or GPRS to forward the message 2 to the mobile phone 11. An example representation of data stored in the messages 2 and/or 3 is the following:
<WifiMessage>
   <Connection name="host-connection" type="WEP" key="A12E4D00AD39F" />
   <other data needed to establish and authorize Wifi connection>
</WifiMessage>

Upon receiving of the message 2, the mobile phone 11 transforms the message 2 into a wake-up message 3 and sends it to the laptop via a Bluetooth interface (or for example a Wibree interface or a Near Field Communication (NFC) interface). Upon receiving the wake-up message 3, the laptop 12 wakes up from the stand-by mode (if applicable), and connects to the access point 24 optionally using the information in the wake-up message 3 about the type of the access point. In principle only a trigger message is needed to indicate that some access point is in the neighborhood. Upon receiving that trigger message, the laptop switches on the Wifi subsystem and can easily seek and find the access point using the standard Wifi protocols. If a subscription to a particular network of access points has been installed on the laptop 12, the laptop 12 will be able to connect using credentials stored locally on the laptop 12.

Optionally the server 23 and/or the server 21 are configured to only send the message 1 and/or 2, respectively, when additional conditions are met. These conditions may include for example: (1) only when the mobile phone has moved to another cell in the mobile phone network; (2) only during some predetermined time intervals; (3) only if the user has enabled this particular functionality; (4) only if new content is available for downloading to the laptop 12. These conditions are configured using server 21. This allows to further increase power efficiency, because it avoids that the laptop 12 is waked up and caused to connect to the access point 24 and to the server 22 at times when it is not desired.

The condition (4) above can be implemented in several ways. For example, as soon as new content becomes available on server 22, it notifies the server 21 by message 10. Server 21 can handle message 10 in one of several ways. First, it can simply forward the message via server 23 to the mobile phone 11. The mobile phone can then forward it to the laptop either immediately or only after also a message 2 regarding availability of an access point is received. Second, server 21 can wait until it has received message 10 and it has established that an access point is available, and then send the message 2. Third, server 21 can simply ignore message 10. These settings may be configured by the user.

The content on the server 22 for downloading to the laptop can include for example video-on-demand items, conference call and messenger functionality, RSS feeds, news items, stock quotes, e-mail, calendar notifications, VOIP, etc. The content on the server 22 may include time-varying items, but it may also include static items. The system set forth can also be used while the user is working on the laptop, for example in an airport or in a train. The user performs offline activities (e.g. working on a document, preparing a slide show, reading and writing emails using a local mailbox) when no access point is available. When the message 3 is received, the user may be notified that the access point is available and prompt the user whether to connect. The laptop may also be configured to automatically set up the connection and optionally to automatically perform some activities, such as synchronizing e-mail, downloading the content items, etc.

The laptop may also be configured to be waked up from a standby mode after receiving message 3, and setting up the connection, performing the synchronizing activities, disconnect, and return to stand-by mode.

The hardware elements and the communication protocols mentioned above are only examples. Instead of Wifi, Bluetooth, and GSM, any suitable wireless communication protocol can be employed. The Bluetooth protocol can also be replaced by a wired connection such as USB. The mobile phone 11 and the laptop 12 may be conveniently combined in a single device, for example a laptop with Wifi subsystem, the Wifi subsystem comprising a wireless transceiver, and with a PCMCIA card providing access to a GSM network. The laptop 12 may be replaced by for example a handheld computer, a PDA, or a Wifi-enabled voice-over-IP (VOIP) telephone handset. The telephone handset may be a combined VOIP/GSM handset, in which case it can also perform the tasks of the mobile phone 11. The GSM/GPRS network may be replaced with any other suitable wireless network type, for example UMTS. The servers 21,22,23 only give a simplified example of a server system. The functionality described may be distributed among any number of servers. The laptop 12 may also be used to configure the server 21. The Wifi network may be any type of network. The system is most useful if the network has a plurality of geographically distributed access points, where the access points are relatively sparsely distributed such that large geographic areas are not covered by any access point. The system can also be of use in the situation where different types of access points are available in different geographic locations, and it is advantageous to know which type(s) of access point(s) are available before setting up the connections.

The mobile phone 11 and the GSM network including the base station 25 and server 23 may also be replaced by another system that is capable of establishing the geographic location. Such a system is for example the Global Positioning System (GPS). When GPS or a similar system is used, preferably at least a portion of the functionality of server 21 is provided locally on the laptop 12. GPS can also be used in addition to GSM. In that case, GPS may be used to obtain geographic information, and the GSM network may be used to obtain information about locations of access points and/or about the availability of new content.

Several techniques are available for communication between personal devices as in the described scenario, such as the mobile phone 11 and the laptop 12. Wired examples include an USB interface and a PCMCIA interface. Wireless examples include Bluetooth, Wibree, and NFC. Wifi could in theory also be used. However, it is advantageous if the signal sent from the mobile phone 11 to the laptop 12 is a wireless signal having a range smaller than the coverage area of the second wireless transceiver. This is to prevent a 'false alarm': if the mobile phone and the laptop are far away from each other, the location information is less accurate with respect to the actual location of the first wireless transceiver. In such a case it is better if the signal is not received by the laptop 12.

Bluetooth is a wireless data system and can carry data at speeds up to 721 Kbps in its basic form and in addition to this it offers up to three voice channels. Bluetooth technology enables a user to replace cables between devices such as printers, fax machines, desktop computers and peripherals, and a host of other digital devices. The technology is intended to be placed in a low cost module that can be easily incorporated into electronics devices of all sorts. The Bluetooth radio is built into a small microchip and operates in a globally available frequency band ensuring communication compatibility worldwide. Software controls and identity coding built into each microchip ensure that only those units preset by their owners can communicate.

A new short range wireless standard named Wibree has recently been announced. Its aim is to be an industry standard for enabling wireless connectivity between small devices. The new Wibree technology has been developed by the Nokia Research Centre. The Wibree standard offers a number of advantages: Ultra low peak, average & idle mode power consumption; ultra low cost & small size for accessories & human interface devices (HID); minimal cost & size addition to mobile phones & PCs; and global, intuitive & secure multi-vendor interoperability. Wibree may complement other local wireless connectivity technologies, and may consume significantly less power. This enables it to be used in small electronics items such as button cell powered devices where power is particularly limited.

Near Field Communication (NFC) works through magnetic induction and is suitable for distances up to 10 cm.

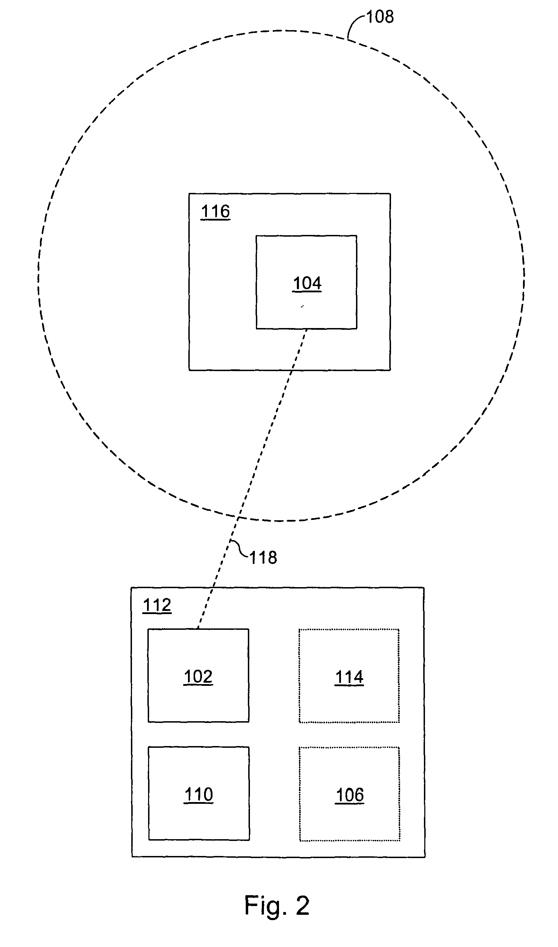

Figure 2 illustrates an embodiment of the invention. A portable device 112 is shown having a first wireless transceiver 102. A second wireless transceiver 104 is also shown. The wireless transceivers may be Wifi or IEEE 802.11 compliant. The unit 116 controlling the second wireless transceiver 104 may be, for example, a desktop or portable computer or other any other Wifi enabled device, for example for performing peer-to-peer communication. The unit 116 may also be an access point for providing access to a wide-area network. The second wireless transceiver 104 (and thus the unit 116) has a coverage area 108, which defines the area within which other wireless devices, such as the first wireless transceiver 102, may communicate with the second wireless transceiver 104. It can be seen that in figure 2 the first wireless transceiver is not located within the coverage area 108 of the second wireless transceiver 104.

The portable device 112 comprises a means 106 for establishing whether the first wireless transceiver is in a coverage area (108) of the second wireless transceiver in dependence on a geographic location information relating to the first wireless transceiver and a geographic location information relating to the second wireless transceiver. Such information may be stored (not shown) in a memory of the portable device or input via a user transceiver or communications means. The means 106 may also be implemented in a different unit (such as the mobile phone 11 or the server 23 as explained in relation to figure 1). In that case, block 106 represents an input that allows to receive a signal when the first wireless transceiver 102 is in the coverage area 108 of the second wireless transceiver 104.

The portable device 112 also comprises a control module 110 for, upon establishing that the first wireless transceiver is in the coverage area of the second wireless transceiver, setting up a connection 118 between the first wireless transceiver and the second wireless transceiver. The control module 110 obtains the required information from the means 106.

The portable device 112 further comprises a localizer 114 for establishing the geographic location information relating to the first wireless transceiver 102, i.e. the location of the portable device 112. This localizer may comprise a GPS receiver. Alternatively the localizer is implemented using the GSM network as explained with respect to figure 1.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. The carrier may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system for wireless communication, the system comprising
a first wireless transceiver (102);
a second wireless transceiver (104);
a means (106) for establishing whether the first wireless transceiver is in a coverage area (108) of the second wireless transceiver by comparing a geographic location information relating to the first wireless transceiver and a geographic location information relating to the second wireless transceiver; and
a means for waking up the first wireless transceiver from a stand-by mode upon establishing that the first wireless transceiver is in the coverage area of the second wireless transceiver.

2. The system according to claim 1, further comprising a control module (110) for, upon establishing that the first wireless transceiver is in the coverage area of the second wireless transceiver, setting up a connection (118) between the first wireless transceiver and the second wireless transceiver.

3. The system according to claim 2, wherein the first wireless transceiver and the control module are part of a portable device (112, 12), the system further comprising a localizer (114, 23) for establishing the geographic location information of the first wireless transceiver.

4. The system according to claim 3, further comprising a localization device (11), and wherein the localizer is arranged for generating the geographic location information of the first wireless transceiver based on a geographic location of the localization device, and wherein the localization device comprises an output for providing a signal to the portable device when the first wireless transceiver is in a coverage area of the second wireless transceiver.

5. The system according to claim 4, wherein the signal is a wireless signal having a range smaller than the coverage area of the second wireless transceiver.

6. The system according to claim 3, wherein the portable device comprises means for retrieving content, for example a newspaper, via the connection.

7. The system according to claim 3, wherein the portable device comprises means for synchronizing data, for example e-mail or calendar items, via the connection.

8. The system according to claim 4, wherein the localization device is a mobile phone (11), the system further comprising a server system (21, 23) connected to the mobile phone via a mobile phone network, the server system comprising
a mobile phone localizer for establishing the geographic location information of the localization device;
the localizer; and
an output for transmitting a signal to the localization device upon establishing by the localizer that the first wireless transceiver is in the coverage area of the second wireless transceiver.

9. The system according to claim 8, wherein
the server system further comprises a content flag for indicating whether new content is available to be provided to the portable device via the connection.

10. The system according to claim 9, wherein the output is arranged for only transmitting the signal if the new content is available and the first wireless transceiver is in the coverage area of the second wireless transceiver.

11. The system according to claim 9, wherein the output is arranged for transmitting a first signal when the new content is available and a second signal when the first wireless transceiver is in the coverage area of the second wireless transceiver.

12. The system according to claim 4, wherein the localization device comprises means for including in the signal information regarding credentials needed for establishing a connection with the second wireless transceiver.

13. The system according to claim 1 or 2, wherein the second wireless transceiver has a fixed geographic location, the system further comprising a storage means for storing the geographic location information corresponding to the fixed geographic location of the second wireless transceiver.

14. The system according to claim 13, wherein the second wireless transceiver is part of an access point for providing access to a wide-area network.

15. The system according to claim 14, wherein the first wireless transceiver and the second wireless transceiver are configured for performing IEEE 802.11 compliant communication.

16. A portable device (112) for wireless communication, the portable device comprising
a first wireless transceiver (102);
a means (106) for establishing whether the first wireless transceiver is in a coverage area of a second wireless transceiver in dependence on a geographic location information of the first wireless transceiver and a geographic location information of the second wireless transceiver; and
a means for, upon establishing that the first wireless transceiver is in the coverage area of a second wireless transceiver, waking up the first wireless transceiver from a stand-by mode.

17. The portable device according to claim 16, further comprising a control module (110) for, upon establishing that the first wireless transceiver is in the coverage area of a second wireless transceiver, setting up a connection between the first wireless transceiver and the second wireless transceiver.

18. A method of wireless communication, the method comprising
establishing whether a first wireless transceiver is in a coverage area of a second wireless transceiver by comparing a geographic location information of the first wireless transceiver and a geographic location information of the second wireless transceiver; and
upon establishing that the first wireless transceiver is in the coverage area of the second wireless transceiver, waking up the first wireless transceiver from a stand-by mode.

19. Method according to claim 18, the method further comprising
upon establishing that the first wireless transceiver is in the coverage area of the second wireless transceiver, setting up a connection between the first wireless transceiver and the second wireless transceiver.
